# EUROPEAN PATENT SPECIFICATION

(11) **EP 1 066 124 B1**
(45) Date of publication and mention of the grant of the patent: **03.07.2002**
(21) Application number: 99907792.8
(22) Date of filing: 22.03.1999
(51) Int. Cl.: B09B 1/00

(54) **SYSTEM FOR THE FAST AND REMOVABLE COVERING OF LOADS OF WASTE WITH SHEETS OF ADSORBING AND TRANSPIRING MATERIAL**
SYSTEM ZUR SCHNELLEN UND LÖSBAREN ABDECKUNG VON ABFALL-LASTEN MIT FOLIEN AUS ADSORBIERENDEM UND TRANSPIRIERENDEM MATERIAL
SYSTEME PERMETTANT DE RECOUVRIR RAPIDEMENT ET DE MANIERE AMOVIBLE DES CHARGES DE DECHETS A L'AIDE DE FEUILLES FAITES D'UN MATERIAU ADSORBANT ET TRANSPIRANT

(30) Priority: 27.03.1998 IT BO980201
(43) Date of publication of application: 10.01.2001
(73) Proprietor: Simoni, Giuliana, 40026 Imola (IT)
(72) Inventor: Simoni, Giuliana, 40026 Imola (IT)
(74) Representative: Beszédes, Stephan G., Dr.
(86) International application number: IB9900498
(87) International publication number: WO9950000

(56) References cited:
- WO-A-95/13147
- DE-U- 29 500 726
- GB-A- 2 288 598
- "Kompostmieten einfach abdecken" CHEMIETECHNIK. SONDERAUSGABE, UMWELT 95/96, vol. 24, 1995, page 71 XP000538818 HEIDELBERG DE
- PATENT ABSTRACTS OF JAPAN vol. 17, no. 155 (M-1388), 26 March 1993 & JP 04 323007 A (GORE TEX), 12 November 1992

## Description

### TECHNICAL FIELD

The present invention pertains to the adsorbing of the exhalations from loads of waste material.

### STATE OF THE ART

It is known that to reduce the unpleasant and unhealthy exhalations of the gases produced by the aerobic decomposition of the waste material two systems are currently available.

The first consists of the irrigation of the surface of the load with special enzymes that are able to catch and metabolize the exhalations.

The second system is to cover with soil the loads of waste so that to obtain a layered waste dumping area with layers of wasted material and layers of earth soil.

The efficacy of the enzymes irrigation system is limited only to the surface layer of the waste load.

The system of the alternated layers of earth soil appear not very efficient due to the scarce filtering ability of the soil layer and also because of the weather variations.

The problem of odour suppression of waste dumps was recognized but solved in various other ways:
WO95/13147: No specific solution offered; the only reference possibly related to this problem is to treat jute sheeting with chemicals;
GB-A-2 288 598: The covering material is to be treated with a deodorizer;
DE-U-295 00 726.5: Microporous Polyurethane sheeting will accumulate condensed water and the water will adsorb odorous substances.
JP-A-04323007: PTFE sheeting is proposed in combination with an adsorbent for odour suppression, but no reference is included to the application of such material to waste dumps.

The present invention suggests a practical, economic and reliable system that solves in the most effective manner all the hygiene problems of the loads of waste material.

This has been solved with the method of claim 1.

The present invention suggests a practical, economic and reliable system that solves in the most effective manner all the hygiene problems of the loads of waste material.

### DESCRIPTION

The system, object of the present invention, is now disclosed in the following detailed description, with reference to the figures of the drawings attached as a not limiting example.

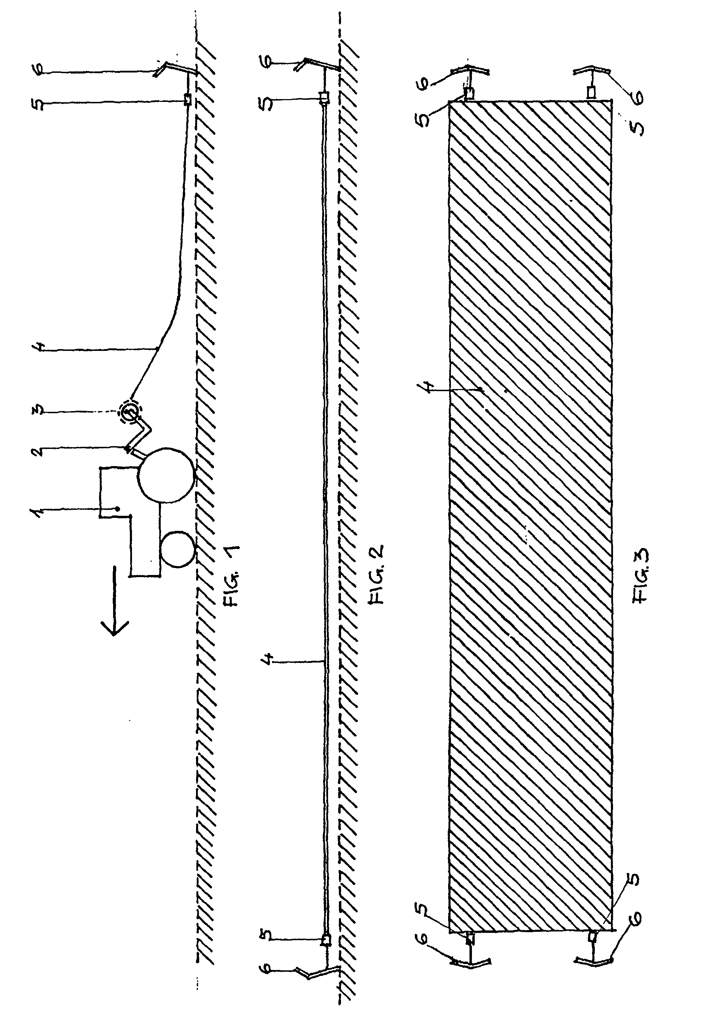

Figure 1 schematizes, in a side view, a possible mechanical procedure to realize a system to lay down sheets of absorbing and transpiring material to cover the loads of waste . It can be noticed the employment of an agricultural tractor specially equipped. In figure 1 the initial phase of the procedure is represented.

Figure 2 schematizes, in a side view, the completing of the placing operation and the following terminal fixing of the sheet through pickets and elastic wires.

Figure 3 schematizes, in plant view, the final position of the sheet attached to the edges with stakes and elastic tension wires.

Figure 4 schematizes, on a side view, the operation of removal of the previously laid sheet.

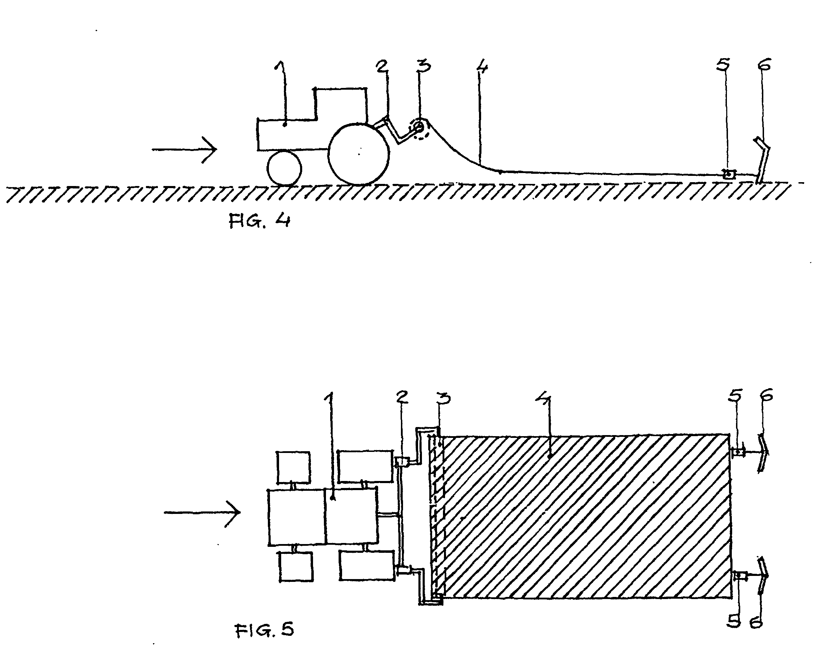

Figure 5 schematizes, in plant view, the operation of removal of the sheet with the same agricultural tractor especially equipped.

In the figures of the drawings each single detail is marked as follows:
1 is an agricultural tractor specially equipped. It is understood that the same operations can be performed by means of a mechanical moving equipment, or by an animal or even manually.
2 indicates a support device for the rolled sheet.
3 is a roll of adsorbing and transpiring material.
4 indicates the sheet of adsorbing and transpiring material laid over a load of waste.
5 indicates elastic tension wires that keep the sheet flat.
6 are pickets to fix the sheet's edges to the ground.

The evidence of the figures makes clear the simplicity and the reliability of the system object of the present invention. Of course, after having laid and fixed a first sheet, one will lay other sheets until a complete covering of the waste load is achieved. Later each sheet will be removed periodically and will be wrapped on a roller. After having removed the covering sheets, on the load of waste could be placed other layers of waste that will later be covered by the same sheet. The functional benefits and the high economy of the system object of the present invention will allow considerable savings in the management of dumping site for urban solid waste and for other similar ecological problems. It is therefore evident that all those system for the fast and removable covering of loads of waste with sheets of adsorbing and transpiring material, realized upon the characteristics of the present invention such as basically described, showed and hereinafter claimed, will be included in the protection sphere of this industrial invention.

## Claims

1. Method for the fast and removable covering of loads of waste with sheets of transpiring material comprising the operation of periodically laying and removing to protect the waste and to allow the fast periodic removal of the same sheets, **characterized by** that the sheets are adsorbing to neutralize any odorous exhalation.

2. Method according to claim 1, **characterized by** that after having removed the covering sheet, on the load of waste other layers of waste and thereon the same covering sheet, which had been removed, are placed.

## Patentansprüche

1. Verfahren zum schnellen und entfernbaren Abdecken von Mülladungen mit Folien aus durchlässigem Material, umfassend den Arbeitsgang des periodischen Auflegens und Entfernens, um den Müll zu schützen und das schnelle periodische Entfernen derselben Folie zu gestatten, **dadurch gekennzeichnet, daß** die Folien adsorbierend sind, um jegliche mit Geruch behaftete Ausdünstung zu neutralisieren.

2. Verfahren nach Anspruch 1, **dadurch gekennzeichnet, daß** nach dem Entfernen der Deckschicht auf die Mülladung andere Müllschichten und darauf dieselbe Abdeckfolie, welche entfernt worden war, aufgebracht werden.

## Revendications

1. Système permettant de recouvrir rapidement et de manière amovible des charges de déchets à l'aide de feuilles faites d'un matériau absorbant et permettant de les poser et de les retirer périodiquement afin de protéger les déchets et de permettre le retrait périodique rapide des même feuilles, **caractérisé en ce que** les feuilles sont adsorbantes afin de neutraliser toute exhalation odorante.

2. Système selon la revendication 1, **caractérisé en ce que** après avoir retiré la feuille de couverture, d'autres couches de déchets puis la même feuille de couverture que celle qui avait été retirée, sont déposées sur la charge de déchets.
